# FASCICULE DE BREVET EUROPEEN

(11) **EP 4 053 952 B1**
(45) Date de publication et mention de la délivrance du brevet: **30.09.2026**
(21) Numéro de dépôt: 22159726.3
(22) Date de dépôt: 02.03.2022
(51) Int. Cl.: H01M 8/2483, H01M 8/0265, C25B 1/04, C25B 9/75, C25B 9/77, C25B 15/08, H01M 8/10

(54) **COLLECTEUR OPTIMISÉ DE REACTEUR ÉLECTROCHIMIQUE**
OPTIMIERTER KOLLEKTOR EINES ELEKTROCHEMISCHEN REAKTORS
OPTIMISED COLLECTOR FOR ELECTROCHEMICAL REACTOR

(30) Priorité: 05.03.2021 FR 2102163
(43) Date de publication de la demande: 07.09.2022
(73) Titulaire: Alstom Hydrogène SAS, 13547 Aix en Provence Cedex 4 (FR)
(72) Inventeur: GUENOT, Benoit, 13100 AIX EN PROVENCE (FR); RAKOTONDRAINIBE, André, 13090 AIX-EN-PROVENCE (FR); GENTILS, Bruno, 83170 TOURVES (FR)
(74) Mandataire: Plasseraud IP

(56) Documents cités:
- DE-A1- 102017 211 755
- KR-A- 20100 072 802
- US-A1- 2010 248 066
- US-A1- 2011 223 513
- US-A1- 2011 229 799
- US-A1- 2012 122 008

## Description

**La présente** invention concerne le domaine des réacteurs électrochimiques, tels que les piles à combustible ou les électrolyseurs, et en particulier la gestion de la circulation des fluides dans de tels réacteurs électrochimiques.

Il est possible de réaliser un réacteur électrochimique, tel qu'une pile à combustible ou un électrolyseur, comprenant plusieurs cellules électrochimiques superposées formées grâce à un empilement de plaques séparatrices et d'assemblages membrane-électrodes (ou AME ou encore MEA de l'anglais « Membrane-Electrode Assembly »), chaque cellule électrochimique étant formée d'un assemblage membrane-électrodes interposé entre deux plaques séparatrices.

Chaque assemblage membrane-électrodes est un stratifié formé d'une membrane échangeuse d'ions, par exemple une plaque échangeuse de protons, prise en sandwich entre deux électrodes.

Chaque plaque séparatrice de chaque cellule électrochimique a notamment pour fonction de canaliser un fluide pour sa circulation le long d'une face de l'assemblage membrane-électrodes de cette cellule électrochimique en regard de laquelle est située la plaque séparatrice en question.

Pour ce faire, la plaque séparatrice définit avec ladite face de l'assemblage membrane-électrodes une chambre fluidique pour la circulation du fluide. La plaque séparatrice comprend par exemple une pluralité de gorges délimitant la chambre fluidique.

Les plaques séparatrices sont munies d'ouvertures qui sont alignées lorsque les plaques séparatrices sont empilées, pour définir des collecteurs, chaque collecteur étant en communication fluidique avec une chambre fluidique de chacune des cellules électrochimiques, via un port de raccordement.

Chaque collecteur est un collecteur d'entrée pour alimenter les chambres fluidiques raccordées à ce collecteur avec un fluide, ou un collecteur de sortie pour récupérer du fluide à la sortie des chambres fluidiques raccordées à ce collecteur.

Pour un fonctionnement approprié d'un réacteur électrochimique comprenant plusieurs cellules électrochimiques, il est souhaitable d'assurer une circulation des fluides uniforme entre les différentes cellules électrochimiques.

Un collecteur formé à travers des ouvertures de plaques séparatrices d'un empilement de plaques séparatrices et d'assemblages membrane-électrodes, s'étend à travers l'empilement, les ports de raccordement raccordant des chambres fluidiques de cellules électrochimiques à ce collecteur étant répartis le long du collecteur, entre une extrémité amont du collecteur et une extrémité aval du collecteur.

Si le collecteur est un collecteur d'entrée, la quantité de fluide dans le collecteur diminue depuis son extrémité amont vers son extrémité aval.

Ceci peut diminuer la vitesse d'écoulement du fluide alimentant les chambres fluidiques des cellules électrochimiques dont les ports de raccordement sont situés le plus en aval du collecteur, et nuire à l'uniformité de la distribution du fluide dans les cellules électrochimiques.

Pour pallier ce problème, il est possible d'insérer dans le collecteur un insert configuré pour définir à l'intérieur du collecteur un conduit présentant une section transversale dont l'aire est décroissante de l'extrémité amont du collecteur vers l'extrémité aval du collecteur, de manière à maintenir une vitesse d'écoulement du fluide sensiblement constante tout le long du conduit.

US2011/223513A1 divulgue un insert de collecteur définissant un canal dont la section transversale possède une aire décroissante et débouche dans un collecteur de la pile à combustible par des sorties, l'insert de collecteur étant formé d'une pluralité de tronçons distincts possédant chacun une sortie respective.

Un des buts de l'invention est de proposer un insert de collecteur permettant d'améliorer l'écoulement d'un fluide dans les différentes cellules électrochimiques d'un réacteur électrochimique.

A cet effet, l'invention propose un insert de collecteur selon la revendication 1.

La prévision d'un canal respectif associé au port de raccordement de chaque chambre fluidique raccordée au collecteur, qui s'étend entre le conduit principal et le port de raccordement de cette chambre fluidique, permet d'adapter la section transversale, la longueur et/ou la forme du canal pour un écoulement du fluide approprié entre le canal et le port de raccordement de la chambre fluidique. Il est ainsi possible d'obtenir un écoulement satisfaisant du fluide entre le collecteur et les ports de raccordement des chambres fluidique des cellules électrochimiques, en particulier pour une circulation uniforme du fluide dans les chambres fluidiques des cellules électrochimiques raccordées au collecteur muni de l'insert de collecteur.

Des caractéristiques optionnelles de l'insert de collecteur sont définies aux revendications 2 à 12.

L'invention concerne aussi un réacteur électrochimique selon la revendication 13.

Le réacteur électrochimique est par exemple une pile à combustible, en particulier une pile à combustible à membrane échangeuse de proton, ou un électrolyseur.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique en perspective d'un réacteur électrochimique et d'un insert de collecteur ;
- la Figure 2 est une vue en coupe de l'insert de collecteur ;
- la Figure 3 est une vue en coupe partielle du réacteur électrochimique montrant l'insert de collecteur inséré dans le collecteur et une cellule électrochimique du réacteur électrochimique ; et
- la Figure 4 illustre un procédé d'assemblage du réacteur électrochimique.

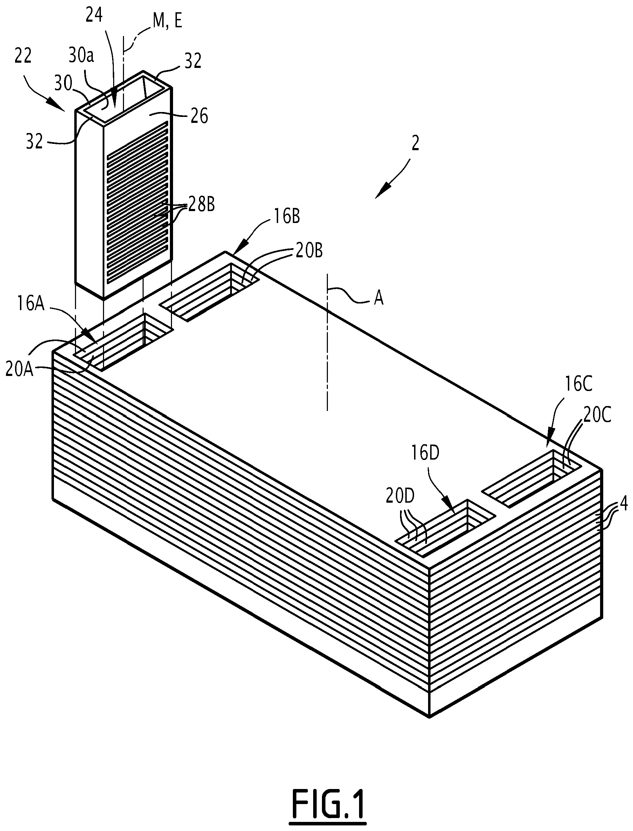

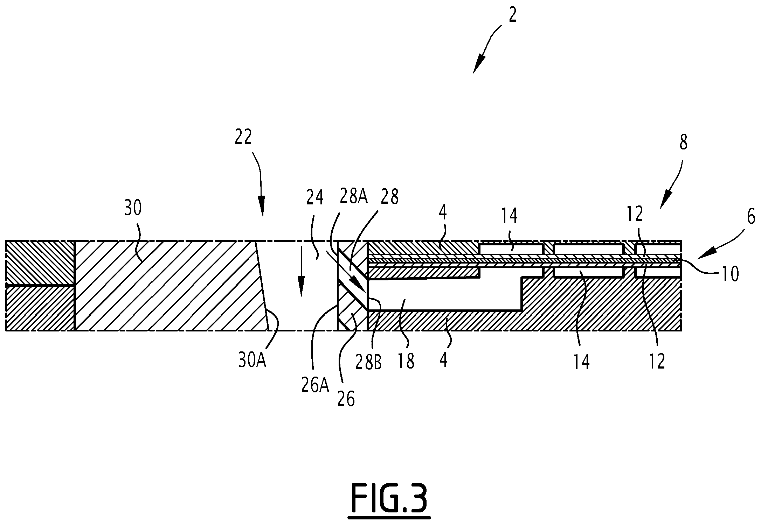

Comme illustré sur les Figures 1 à 3, le réacteur électrochimique 2 comprend un empilement de plaques séparatrices 4 et d'assemblages membrane-électrodes 6 (Figure 3) formant une pluralité de cellules électrochimiques 8 (Figure 3) superposées.

Les plaques séparatrices 4 et les assemblages membrane-électrodes 6 sont empilés suivant une direction d'empilement A. Seules les plaques séparatrices 4 sont visibles sur la Figure 1, et un assemblage membrane-électrodes 6 est visible sur la Figure 3.

Comme illustré sur la Figure 3, chaque cellule électrochimique 8 est formée par un assemblage membrane-électrodes 6 pris en sandwich entre deux plaques séparatrices 4.

Chaque assemblage membrane-électrodes 6 est un stratifié comprenant une membrane échangeuse d'ions 10, en particulier une membrane échangeuse de protons, prise en sandwich entre deux électrodes 12.

Dans chaque cellule électrochimique 8, chaque plaque séparatrice 4 est configurée pour canaliser un fluide le long de la face de l'assemblage membrane-électrodes 6 en regard de ladite la plaque séparatrice 4.

Chaque plaque séparatrice 4 a sa face tournée vers l'assemblage membrane-électrodes 6 configurée pour définir avec l'assemblage membrane-électrodes 6 une chambre fluidique 14 pour la circulation d'un fluide le long de cette face de l'assemblage membrane-électrodes 6.

Ladite face de la plaque séparatrice 4 possède par exemple une pluralité de gorges définissant un champs d'écoulement (ou « flow field ») pour l'écoulement du fluide le long de l'assemblage membrane-électrodes 6.

Chaque cellule électrochimique 8 comprend deux chambres fluidiques 14 situées de part et d'autre de l'assemblage membrane-électrodes 6, chaque chambre fluidique 14 étant formée entre l'assemblage membrane-électrodes 6 et une plaque séparatrice 4 respective de la cellule électrochimique 8.

De manière connue, les plaques séparatrices 4 du réacteur électrochimique 2 incluent des plaques séparatrices bipolaires et/ou des plaques séparatrices monopolaires.

Chaque plaque séparatrice 4 bipolaire est prévue pour être disposée entre deux assemblages membrane-électrodes 6, chacune des deux faces opposées de la plaque séparatrice 4 bipolaire étant configurée pour définir une chambre fluidique 14 avec un assemblage membrane-électrodes 6. Chaque plaque séparatrice 4 bipolaire est commune à deux cellules électrochimiques 8 adjacentes.

Chaque plaque séparatrice 4 monopolaire a une seule de ses deux faces configurée pour définir un chambre fluidique 14 avec un assemblage membrane-électrodes 6 appliqué contre cette face. Chaque plaque séparatrice 4 monopolaire est situé à une extrémité de l'empilement ou entre un assemblage membrane-électrodes 6 d'une cellule électrochimique 8 et une plaque séparatrice 4 monopolaire d'une autre cellule électrochimique 8 adjacente.

Dans un exemple de réalisation préféré, le réacteur électrochimique comprend un empilement alterné de plaques séparatrices 4 bipolaires et d'assemblages membrane-électrodes 6, avec une plaque séparatrice 4 monopolaire à chaque extrémité de l'empilement.

Le réacteur électrochimique 2 possède un collecteur 16A en communication fluidique avec une chambre fluidique 14 de chaque cellule électrochimique 8 via un port de raccordement 18 (Figure 3).

Le collecteur 16A est un collecteur d'entrée pour alimenter un fluide dans chaque chambre fluidique 14 avec laquelle il est en communication fluidique, ou un collecteur de sortie pour récupérer du fluide à la sortie de chaque chambre fluidique 14 avec laquelle il est en communication fluidique.

Comme visible sur la Figure 3, une seule des deux chambres fluidiques 14 de chaque cellule électrochimique 8 est raccordée au collecteur 16A. L'autre est par exemple raccordée à un autre collecteur comme cela sera décrit par la suite.

Le collecteur 16A est formé par des ouvertures 20A alignées des plaques séparatrices 4 empilées du réacteur électrochimique 2. Le collecteur 16A s'étend suivant un axe de collecteur M parallèle à la direction d'empilement A.

Les ouvertures 20A sont alignées et présentent la même section transversale. Le collecteur 16A présente une section transversale constante long de son axe de collecteur M.

Le réacteur électrochimique 2 comprend un insert de collecteur 22 configuré pour être inséré dans le collecteur 16A et pour délimiter à l'intérieur du collecteur 16A un conduit principal 24 présentant une section transversale dont l'aire diminue depuis une première extrémité 24A du conduit principal 24 vers une deuxième extrémité 24B du conduit principal 24.

L'insert de collecteur 22 s'étend suivant un axe d'extension E et est configuré pour être inséré dans le collecteur 16A suivant son axe d'extension E, celui-ci étant alignée avec l'axe de collecteur M.

L'insert de collecteur 22 possède une paroi de raccordement 26 qui possède une première face 26A prévue pour délimiter le conduit principal 24 et une deuxième face 26B opposée à la première face 26A.

L'insert de collecteur 22 comprend une pluralité de canaux 28. Chaque canal 28 s'étend au travers de la paroi de raccordement 26, entre un premier orifice 28A débouchant sur la première face 26A et un deuxième orifice 28B débouchant sur la deuxième face 26B.

Les premiers orifices 28A sont répartis le long de la première face 26A de telle manière qu'ils sont répartis le long du conduit principal 24 entre la première extrémité 24A et la deuxième extrémité 24B.

Les deuxièmes orifices 28B sont répartis le long de la deuxième face 26B de telle manière que chaque deuxième orifice 28B est situé en regard d'un port de raccordement 18 respectif lorsque l'insert de collecteur 22 est inséré dans le collecteur 16A.

Lorsque l'insert de collecteur 22 est inséré dans le collecteur 16A, chaque canal 28 relie le conduit principal 24 à un port de raccordement 18 respectif pour la circulation d'un fluide entre le conduit principal 24 et la chambre fluidique 14 correspondant à ce port de raccordement 18.

Les ports de raccordement 18 des chambres fluidiques 14 débouchant dans le collecteur 16A sont situés sur une même surface interne de raccordement du collecteur 16A.

Lorsque l'insert de collecteur 22 est inséré dans le collecteur 16A, la deuxième face 26B de la paroi de raccordement 26 est située en regard de la surface interne de raccordement, chaque deuxième orifice 28B étant en regard d'un port de raccordement 18 respectif.

Chaque canal 28 présente une longueur prise entre son premier orifice 28A et son deuxième orifice 28B.

De préférence, les canaux 28 possèdent des longueurs égales.

La paroi de raccordement 26 présente une épaisseur prise entre la première face 26A et la deuxième face 26B, perpendiculairement à l'axe d'extension E de l'insert de collecteur 22.

Dans un exemple de réalisation, la paroi de raccordement 26 possède une épaisseur constante d'une extrémité à l'autre du conduit principal 24, en particulier de la première extrémité 24A du conduit principal 24 vers la deuxième extrémité 24B du conduit principal 24.

Dans un exemple de réalisation particulier, la première face 26A et la deuxième face 26B de la paroi de raccordement 26 sont sensiblement parallèles à l'axe d'extension E de l'insert de collecteur 2.

Dans un exemple de réalisation, l'insert de collecteur 22 est creux, le conduit principal 24 étant défini à l'intérieur de l'insert de collecteur 22.

L'insert de collecteur 22 possède par exemple une paroi de canalisation 30, le conduit principal 24 étant délimité entre la paroi de raccordement 26 et la paroi de canalisation 30, plus précisément entre la première face 26A de la paroi de raccordement 26 et une face interne 30A de la paroi de canalisation 30 faisant face à la première face 26A de la paroi de raccordement 26.

L'insert de collecteur 22 comprend des parois latérales 32 reliant la paroi de canalisation 30 à la paroi de raccordement 26, en conférant au conduit principal 24 une section transversale à contour fermé, par exemple une section transversale rectangulaire.

De préférence, l'écartement entre la paroi de raccordement 26 et la paroi de canalisation 30 diminue de la première extrémité 24A du conduit principal 24 vers la deuxième extrémité 24B du conduit principal 24.

Dans un exemple de réalisation, la première face 26A de la paroi de raccordement 26 et la face interne 30A de la paroi de canalisation 30 sont planes et inclinées l'une par rapport à l'autre de telle manière qu'elles se rapprochent l'une de l'autre de la première extrémité 24A du conduit principal 24 vers la deuxième extrémité 24B du conduit principal 24.

Dans un exemple de réalisation, une parmi la première face 26A de la paroi de raccordement 26 et la face interne 30 de la paroi de canalisation 30 est parallèle à l'axe d'extension E, l'autre étant inclinée par rapport à l'axe d'extension E de manière que l'aire de la section transversale du conduit principal 24 diminue de sa première extrémité 24A vers sa deuxième extrémité 24B.

De préférence, la face interne 30A de la paroi de canalisation 30 est inclinée par rapport à l'axe d'extension E, la première face 26A de la paroi de raccordement 26 étant parallèle à l'axe d'extension E.

Dans un autre exemple de réalisation, la première face 26A de la paroi de raccordement 26 et la face interne 30A de la paroi de canalisation 30 sont toute les deux planes et inclinées par rapport à l'axe d'extension E.

De préférence, l'insert de collecteur 22 est configuré pour s'insérer de manière ajustée dans chacune des ouvertures 20A délimitant le collecteur 16A, de telle manière que chaque plaque séparatrice 4 puisse être guidée par l'insert de collecteur 22 lors de l'empilement des plaques séparatrices 4 le long de l'insert de collecteur 22.

Avantageusement, en vue suivant son axe d'extension E, l'insert de collecteur 22 présent un contour externe profilé et/ou non-circulaire. Ceci permet d'assurer le guidage de chaque plaque séparatrice 4 à l'aide de l'insert de collecteur 22 lors de la réalisation de l'empilement.

Dans un exemple de réalisation, l'insert de collecteur 22 possède une forme générale externe parallélépipédique. La deuxième face 26B de la paroi de raccordement 26 définit une face externe de l'insert de collecteur 22.

Dans un exemple de réalisation, comme visible sur la Figure 1, le deuxième orifice 28B de chaque canal 28 présente une forme allongée. Dans ce cas, de préférence, les deuxièmes orifices 28B sont parallèles entre eux, et, encore de préférence, allongés perpendiculairements à l'axe d'extension E de l'insert de collecteur 22.

Comme illustré sur la Figure 3, le collecteur 16A est par exemple un collecteur d'entrée prévu pour l'alimentation des chambres fluidiques 14 en communication fluidique avec le collecteur 16A avec un fluide.

En fonctionnement, la première extrémité 24A du conduit principal 24 reçoit le fluide qui s'écoule de la première extrémité 24A vers la deuxième extrémité 28B du conduit principal 24.

Une fraction du fluide entre dans le premier orifice 28A de chaque canal 28 et circule jusqu'au deuxième orifice 28B de ce canal 28 et alimente le port de raccordement 18 situé en regard, pour alimenter la chambre fluidique 14 correspondante.

La quantité de fluide présente dans le conduit principal 24 diminue de la première extrémité 24A vers la deuxième extrémité 24B du fait qu'une fraction de fluide réactif est prélevée par chaque canal 28.

Cependant, la diminution progressive de l'aire de la section transversale du conduit principal 24 de la première extrémité 24A vers la deuxième extrémité 24B permet de conserver une vitesse d'écoulement du fluide sensiblement constante toute le long du conduit principal 24, ce qui permet d'obtenir un écoulement uniforme du fluide vers les chambres fluidiques 14 raccordées au collecteur 16A.

La présence de canaux 28 entre la première face 26A et la deuxième face 26B permet d'adapter chaque canal 28 individuellement pour obtenir un écoulement approprié du fluide entre le collecteur 16A et les chambres fluidiques 14 raccordées à ce collecteur 16A.

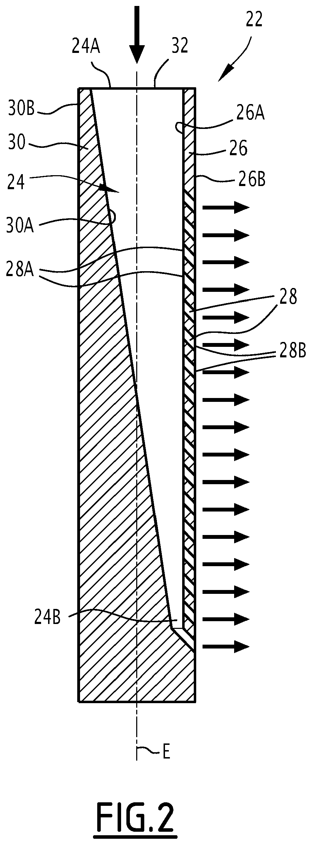

Sur la Figure 2, les canaux 28 sont sensiblement rectilignes, parallèles et de même section transversale constante le long de chaque canal 28.

Cependant, il est possible d'adapter chaque canal 28, par exemple sa longueur, sa forme et/ou sa section transversale constante ou variable, de manière à uniformiser la distribution du fluide dans les chambres fluidiques 14 raccordées au collecteur 16A.

L'insert de collecteur 22 est par exemple fabriqué par un procédé de fabrication par fabrication additive (aussi appelée « impression 3D »). Ceci permet de conférer au conduit principal 24 et à chacun canal 28 les formes désirées.

Comme indiqué plus haut, chaque cellule électrochimique 8 possède deux chambres fluidique 14 situées de part et d'autre de l'assemblage membrane-électrodes 6 de cette cellule électrochimique 8.

En variante, le collecteur 16A est un collecteur de sortie. L'insert de collecteur 22 favorise alors aussi un écoulement uniforme du fluide à la sortie des chambres fluidiques 14 qui débouchent dans ce collecteur 16A, et donc un écoulement uniforme du fluide à travers ces chambres fluidiques 14, dans les différentes cellules électrochimiques 8.

Un seul collecteur 16A recevant un insert de collecteur 22 a été représenté sur la Figure 1 et décrit pour des raisons de simplification.

Comme illustré sur la Figure 1, le réacteur électrochimique 2 peut comprendre plusieurs collecteurs, par exemple quatre collecteurs 16A, 16B, 16C, 16D, chacun formé par des ouvertures 20A, 20B, 20C, 20C alignées des plaques séparatrices 4.

Chaque collecteur 16A, 16B, 16C, 16D est raccordé fluidiquement à une seule des deux chambres fluidique 14 de chaque cellule électrochimique 8. Chaque collecteur 16A, 16B, 16C, 16D est un collecteur d'entrée ou un collecteur de sortie. Chaque chambre fluidique 14 est reliée fluidiquement à deux des collecteurs 16A, 16B, 16C, 16D, l'un étant un collecteur d'entrée et l'autre un collecteur de sortie.

Un seul collecteur 16A peut recevoir un insert de collecteur 22. En variante, au moins deux des collecteurs 16A, 16B, 16C, 16D, reçoivent un insert de collecteur 22 analogue à celui des Figures 1 à 3.

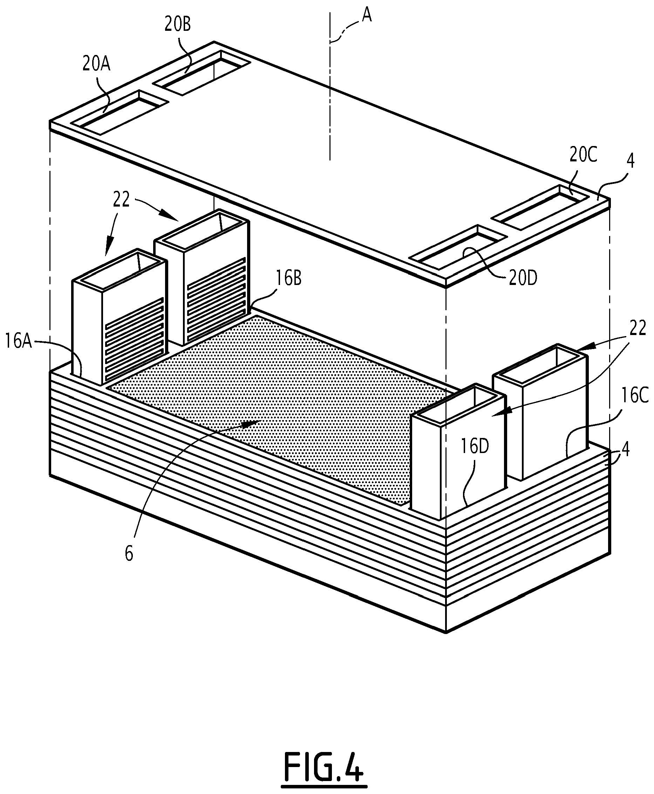

En particulier, et comme dans l'exemple de réalisation illustré sur la Figure 4, chacun des collecteurs 16A, 16B, 16C, 16D reçoit un insert de collecteur 22 respectif analogue à celui des Figures 1 à 3.

Le réacteur électrochimique 2 comprend par exemple un insert de collecteur 22 inséré dans un collecteur 16A alimentant les chambres fluidiques 14 situées d'un premier côté des assemblages membrane-électrodes 6, un insert de collecteur 22 inséré dans un collecteur 16B alimentant les chambres fluidiques 14 situées d'un deuxième côté des assemblages membrane-électrodes 8, un insert de collecteur 22 inséré dans un collecteur 16C récupérant le fluide à la sortie des chambres fluidiques 14 situées du premier côté des assemblages membrane-électrodes 6 et/ou un insert de collecteur 22 inséré dans **un collecteur** 16D récupérant le fluide à la sortie des chambres fluidiques 14 situées du deuxième côté des assemblages membrane-électrodes 6.

Par ailleurs, comme illustré sur la Figure 4, quel que soit le nombre d'insert(s) de collecteur 22 prévu(s), chaque insert de collecteur 22 eut être utilisé pour le guidage des plaques séparatrices 4 lors de la réalisation de l'empilement, notamment lorsque l'insert 22 présente un contour externe profilé et/ou non circulaire, en particulier une forme générale externe parallélépipédique.

Selon un procédé de fabrication avantageux, les plaques séparatrices 4 sont enfilées les unes après les autres sur au moins un insert de collecteur 22 utilisé comme guide pour l'empilement des plaques séparatrices 4, en faisant passer chaque insert de collecteur 22 dans l'ouverture 20A, 20B, 20C, 20D correspondante destinée à définir le collecteur 16A, 16B, 16C, 16D recevant cet insert de collecteur 22.

Dans les différents exemples de réalisation, le réacteur électrochimique 2 est par exemple une pile à combustible configurée pour générer de l'énergie électrique à partir d'un fluide combustible et d'un fluide comburant, par exchange d'ions, en particulier de protons, entre le fluide combustible et le fluide comburant.

Le fluide combustible est par exemple du dihydrogène et le fluide comburant est par exemple du dioxygène ou de l'air. Dans ce cas, les ions échangés à travers la membrane échangeuse d'ions 10 de chaque assemblage membrane-électrodes 6 sont des protons, la membrane échangeuse d'ions 10 étant une membrane échangeuse de protons (ou PEM de l'anglais « Proton Exchange Membrane »).

Un tel réacteur électrochimique 2 comprend généralement deux collecteurs d'entrée et deux collecteurs de sortie. Un ou plusieurs de ces collecteurs peut(peuvent) être muni(s) d'un insert de collecteur 22.

En variante, le réacteur électrochimique 2 est un électrolyseur configuré pour utiliser de l'énergie électrique pour séparer des espèces chimiques contenues dans un fluide, par exemple pour générer du dihydrogène et du dioxygène à partir d'eau.

Un tel réacteur électrochimique 2 comprend généralement un collecteur d'entrée pour le fluide réactif et deux collecteurs de sortie. Un ou plusieurs de ces collecteurs peut(peuvent) être muni(s) d'un insert de collecteur.

## Revendications

1. Insert de collecteur (22) configuré pour être inséré dans un collecteur (16A) d'un réacteur électrochimique (2) comprenant un empilement de plaques séparatrices (4) et d'assemblages membrane-électrodes (6) qui définissent des cellules électrochimiques (8), le collecteur (16A) étant formé par des ouvertures (20A) alignées des plaques séparatrices (4) et chacune des cellules électrochimiques (8) comprenant une chambre fluidique (14) raccordée fluidiquement au collecteur par un port de raccordement (18), l'insert de collecteur s'étendant suivant un axe d'extension (E) et étant configuré pour être inséré dans le collecteur (16A) en définissant à l'intérieur du collecteur (16A) un conduit principal (24) qui présente une section transversale dont l'aire diminue d'une première extrémité vers une deuxième extrémité du conduit principal (24), **caractérisé en ce que** l'insert de collecteur comprend une paroi de raccordement (26) comprenant une première face (26A) prévue pour délimiter le conduit principal (24) et une deuxième face (26B), et une pluralité de canaux (28) s'étendant chacun entre un premier orifice (28A) situé sur la première face (26A) et un deuxième orifice (28B) situé sur la deuxième face (26B), les premiers orifices (28A) étant répartis sur la première face (26A) de manière à être répartis le long du conduit principal (24), et les deuxièmes orifices (28B) étant répartis sur la deuxième face (26B) de telle manière que chaque deuxième orifice (28B) est en regard du port de raccordement (18) de la chambre fluidique (14) d'une cellule électrochimique (8) respective lorsque l'insert de collecteur est inséré dans le collecteur (16A).

2. Insert de collecteur selon la revendication 1, dans lequel l'insert de collecteur est creux, le conduit principal (24) est délimité à l'intérieur de l'insert de collecteur.

3. Insert de collecteur selon la revendication 1 ou 2, dans lequel l'insert de collecteur possède une paroi de canalisation (30), le conduit principal (24) étant délimité entre une face interne (30A) de la paroi de canalisation (30) et la première face (26A) de la paroi de raccordement (26) qui se font face.

4. Insert de collecteur selon la revendication 3, dans lequel la face interne (30A) de la paroi de canalisation (30) et la première face (26A) de la paroi de raccordement (26) sont sensiblement planes et inclinées l'une par rapport à l'autre de manière que l'aire de la section transversale du conduit principal (24) diminue de la première extrémité vers la deuxième extrémité.

5. Insert de collecteur selon l'une quelconque des revendications précédentes, dans lequel la deuxième face (26B) de la paroi de raccordement (26) est sensiblement plane.

6. Insert de collecteur selon l'une quelconque des revendications précédentes, dans lequel les premiers orifices (28A) sont allongés et parallèles entre eux et/ou les deuxièmes orifices (28B) sont allongés et parallèles entre eux.

7. Insert de collecteur selon l'une quelconque des revendications précédentes, dans lequel la paroi de raccordement (26) présente une épaisseur, prise entre la première face (26A) et la deuxième face (26B), qui est sensiblement constante de la première extrémité du conduit principal (24) vers la deuxième extrémité du conduit principal (24).

8. Insert de collecteur selon l'une quelconque des revendications précédentes, dans lequel chaque canal (28) présente une longueur, prise le long du canal entre son premier orifice (28A) et son deuxième orifice (28B), les canaux (28) possédant des longueurs sensiblement égales.

9. Insert de collecteur selon l'une quelconque des revendications précédentes, dans lequel l'insert de collecteur présente une forme extérieure générale parallélépipédique.

10. Insert de collecteur selon l'une quelconque des revendications précédentes, dans lequel l'insert de collecteur est configuré pour s'insérer de manière ajustée dans l'ouverture (20A) de chaque plaque séparatrice (4) de telle manière que chaque plaque séparatrice (4) puisse être guidée par l'insert de collecteur lors de l'empilement des plaques séparatrices le long de l'insert de collecteur.

11. Insert de collecteur selon l'une quelconque des revendications précédentes, dans lequel l'insert de collecteur présente un contour externe non-circulaire en vue suivant son axe d'extension (E).

12. Insert de collecteur selon l'une quelconque des revendications précédentes, dans lequel l'insert de collecteur présente un contour externe profilé en vue suivant son axe d'extension (E).

13. Réacteur électrochimique comprenant une pluralité de plaques séparatrices (4) et d'assemblages membrane-électrodes (6) empilés suivant une direction d'empilement (A) et délimitant des cellules électrochimiques (8) superposées, au moins un collecteur (16A) étant formé par des ouvertures (20A) alignées des plaques séparatrices (4), chacune des cellules électrochimiques (8) comprenant une chambre fluidique (14) raccordée fluidiquement audit collecteur (16A) par un port de raccordement (18), et un insert de collecteur selon l'une quelconque des revendications précédentes inséré dans le collecteur (16A).

14. Réacteur électrochimique selon la revendication 13, le réacteur électrochimique étant une pile à combustible, en particulier une pile à combustible à membrane échangeuse de proton, ou un électrolyseur.

## Patentansprüche

1. Kollektoreinsatz (22), welcher dazu eingerichtet ist, in einen Kollektor (16A) eines elektrochemischen Reaktors (2) eingesetzt zu sein, welcher einen Stapel aus Separatorplatten (4) und Membran-Elektroden-Anordnungen (6) umfasst, welche elektrochemische Zellen (8) definieren, wobei der Kollektor (16A) durch ausgerichtete Öffnungen (20A) der Separatorplatten (4) gebildet ist und jede der elektrochemischen Zellen (8) eine Fluidkammer (14) umfasst, welche über einen Anschlussport (18) fluidisch mit dem Kollektor verbunden ist, wobei sich der Kollektoreinsatz einer Erstreckungsachse (E) folgend erstreckt und dazu eingerichtet ist, in den Kollektor (16A) eingesetzt zu sein, wobei er im Inneren des Kollektors (16A) einen Hauptkanal (24) definiert, welcher einen Querschnitt aufweist, dessen Fläche von einem ersten Ende zu einem zweiten Ende des Hauptkanals (24) hin abnimmt, **dadurch gekennzeichnet, dass** der Kollektoreinsatz eine Anschlusswand (26) umfasst, welche eine erste Fläche (26A), welche zur Begrenzung des Hauptkanals (24) vorgesehen ist, und eine zweite Fläche (26B) umfasst, sowie eine Mehrzahl von Kanälen (28), welche sich jeweils zwischen einer ersten Öffnung (28A), welche an der ersten Fläche (26A) angeordnet ist, und einer zweiten Öffnung (28B) erstrecken, welche an der zweiten Fläche (26B) angeordnet ist, wobei die ersten Öffnungen (28A) an der ersten Fläche (26A) derart verteilt sind, dass sie entlang des Hauptkanals (24) verteilt sind, und die zweiten Öffnungen (28B) an der zweiten Fläche (26B) derart verteilt sind, dass jede zweite Öffnung (28B) dem Anschlussport (18) der Fluidkammer (14) einer jeweiligen elektrochemischen Zelle (8) gegenüberliegt, wenn der Kollektoreinsatz in den Kollektor (16A) eingesetzt ist.

2. Kollektoreinsatz nach Anspruch 1, wobei der Kollektoreinsatz hohl ist, wobei der Hauptkanal (24) im Inneren des Kollektoreinsatzes begrenzt ist.

3. Kollektoreinsatz nach Anspruch 1 oder 2, wobei der Kollektoreinsatz eine Kanalwand (30) aufweist, wobei der Hauptkanal (24) zwischen einer Innenfläche (30A) der Kanalwand (30) und der ersten Fläche (26A) der Anschlusswand (26), welche einander gegenüberliegen, begrenzt ist.

4. Kollektoreinsatz nach Anspruch 3, wobei die Innenfläche (30A) der Kanalwand (30) und die erste Fläche (26A) der Anschlusswand (26) im Wesentlichen eben und derart zueinander geneigt sind, dass die Querschnittsfläche des Hauptkanals (24) von dem ersten Ende zu dem zweiten Ende hin abnimmt.

5. Kollektoreinsatz nach einem der vorhergehenden Ansprüche, wobei die zweite Fläche (26B) der Anschlusswand (26) im Wesentlichen eben ist.

6. Kollektoreinsatz nach einem der vorhergehenden Ansprüche, wobei die ersten Öffnungen (28A) länglich und parallel zueinander sind und/oder die zweiten Öffnungen (28B) länglich und parallel zueinander sind.

7. Kollektoreinsatz nach einem der vorhergehenden Ansprüche, wobei die Anschlusswand (26) eine Dicke, genommen zwischen der ersten Fläche (26A) und der zweiten Fläche (26B), aufweist, welche von dem ersten Ende des Hauptkanals (24) zu dem zweiten Ende des Hauptkanals (24) im Wesentlichen konstant ist.

8. Kollektoreinsatz nach einem der vorhergehenden Ansprüche, wobei jeder Kanal (28) eine Länge aufweist, genommen entlang des Kanals zwischen seiner ersten Öffnung (28A) und seiner zweiten Öffnung (28B), wobei die Kanäle (28) im Wesentlichen gleiche Längen aufweisen.

9. Kollektoreinsatz nach einem der vorhergehenden Ansprüche, wobei der Kollektoreinsatz eine im Wesentlichen quaderförmige äußere Gesamtform aufweist.

10. Kollektoreinsatz nach einem der vorhergehenden Ansprüche, wobei der Kollektoreinsatz dazu eingerichtet ist, passgenau in die Öffnung (20A) jeder Separatorplatte (4) derart eingesetzt zu sein, dass jede Separatorplatte (4) bei einem Stapeln der Separatorplatten entlang des Kollektoreinsatzes durch den Kollektoreinsatz geführt werden kann.

11. Kollektoreinsatz nach einem der vorhergehenden Ansprüche, wobei der Kollektoreinsatz in der Ansicht seiner Erstreckungsachse (E) folgend eine nicht-kreisförmige Außenkontur aufweist.

12. Kollektoreinsatz nach einem der vorhergehenden Ansprüche, wobei der Kollektoreinsatz in der Ansicht seiner Erstreckungsachse (E) folgend eine profilierte Außenkontur aufweist.

13. Elektrochemischer Reaktor, umfassend eine Mehrzahl von Separatorplatten (4) und Membran-Elektroden-Anordnungen (6), welche einer Stapelrichtung (A) folgend gestapelt sind und übereinanderliegende elektrochemische Zellen (8) begrenzen, wobei wenigstens ein Kollektor (16A) durch ausgerichtete Öffnungen (20A) der Separatorplatten (4) gebildet ist, wobei jede der elektrochemischen Zellen (8) eine Fluidkammer (14) umfasst, welche über einen Anschlussport (18) fluidisch mit dem Kollektor (16A) verbunden ist, sowie einen Kollektoreinsatz nach einem der vorhergehenden Ansprüche, welcher in den Kollektor (16A) eingesetzt ist.

14. Elektrochemischer Reaktor nach Anspruch 13, wobei der elektrochemische Reaktor eine Brennstoffzelle, insbesondere eine Protonenaustauschmembran-Brennstoffzelle, oder ein Elektrolyseur ist.

## Claims

1. Collector insert (22) configured to be inserted into a collector (16A) of an electrochemical reactor (2) comprising a stack of separator plates (4) and membrane-electrode assemblies (6) which define electrochemical cells (8), the collector (16A) being formed by aligned openings (20A) of the separator plates (4) and each of the electrochemical cells (8) comprising a fluid chamber (14) fluidically connected to the collector by a connection port (18), the collector insert extending according to an extension axis (E) and being configured to be inserted into the collector (16A) defining inside the collector (16A) a main conduit (24) which has a cross-section, the area of which decreases from a first end towards a second end of the main conduit (24), **characterised in that** the collector insert comprises a connecting wall (26) comprising a first face (26A) intended to delimit the main conduit (24) and a second face (26B), and a plurality of channels (28) each extending between a first orifice (28A) located on the first face (26A) and a second orifice (28B) located on the second face (26B), the first orifices (28A) being distributed over the first face (26A) so as to be distributed along the main conduit (24), and the second orifices (28B) being distributed over the second face (26B) such that each second orifice (28B) is opposite the connection port (18) of the fluid chamber (14) of a respective electrochemical cell (8) when the collector insert is inserted into the collector (16A).

2. Collector insert according to claim 1, wherein the collector insert is hollow, the main conduit (24) is delimited inside the collector insert.

3. Collector insert according to claim 1 or 2, wherein the collector insert has a piping wall (30), the main conduit (24) being delimited between an inner face (30A) of the piping wall (30) and the first face (26A) of the connecting wall (26) facing each other.

4. Collector insert according to claim 3, wherein the inner face (30A) of the piping wall (30) and the first face (26A) of the connecting wall (26) are substantially flat and inclined relative to each other such that the area of the cross-section of the main conduit (24) decreases from the first end to the second end.

5. Collector insert according to any one of the preceding claims, wherein the second face (26B) of the connecting wall (26) is substantially flat.

6. Collector insert according to any one of the preceding claims, wherein the first orifices (28A) are elongate and parallel to each other and/or the second orifices (28B) are elongate and parallel to each other.

7. Collector insert according to any one of the preceding claims, wherein the connecting wall (26) has a thickness, taken between the first face (26A) and the second face (26B), which is substantially constant from the first end of the main conduit (24) to the second end of the main conduit (24).

8. Collector insert according to any one of the preceding claims, wherein each channel (28) has a length, taken along the channel between its first orifice (28A) and its second orifice (28B), the channels (28) having substantially equal lengths.

9. Collector insert according to any one of the preceding claims, wherein the collector insert has a generally parallelepiped outer shape.

10. Collector insert according to any one of the preceding claims, wherein the collector insert is configured to be inserted tightly into the opening (20A) of each separator plate (4) such that each separator plate (4) can be guided by the collector insert when stacking the separator plates along the collector insert.

11. Collector insert according to any one of the preceding claims, wherein the collector insert has a non-circular outer contour in view according to its extension axis (E).

12. Collector insert according to any one of the preceding claims, wherein the collector insert has a profiled outer contour in view according to its extension axis (E).

13. Electrochemical reactor comprising a plurality of separator plates (4) and membrane-electrode assemblies (6) stacked according to a stacking direction (A) and delimiting superimposed electrochemical cells (8), at least one collector (16A) being formed by aligned openings (20A) of the separator plates (4), each of the electrochemical cells (8) comprising a fluid chamber (14) fluidically connected to said collector (16A) by a connection port (18), and a collector insert according to any one of the preceding claims inserted into the collector (16A).

14. Electrochemical reactor according to claim 13, the electrochemical reactor being a fuel cell, in particular a proton-exchange membrane fuel cell, or an electrolyser.
